# EUROPÄISCHE PATENTSCHRIFT

(11) **EP 3 434 515 B1**
(45) Veröffentlichungstag und Bekanntmachung des Hinweises auf die Patenterteilung: **09.09.2020**
(21) Anmeldenummer: 18185095.9
(22) Anmeldetag: 24.07.2018
(51) Int. Cl.: B60N 3/10

(54) **EINRASTVORRICHTUNG FÜR EINE PUSH-PUSH-VERRIEGELUNG UND VERFAHREN ZUM BETÄTIGEN EINER EINRASTVORRICHTUNG**
LOCKING MECHANISM FOR A PUSH-PUSH LOCK AND METHOD FOR ACTUATING A LOCKING MECHANISM
DISPOSITIF D'ENCLIQUETAGE POUR UN VERROUILLAGE PAR POUSSÉE ET PROCÉDÉ D'ACTIONNEMENT D'UN DISPOSITIF D'ENCLIQUETAGE

(30) Priorität: 25.07.2017 DE 102017116742
(43) Veröffentlichungstag der Anmeldung: 30.01.2019
(73) Patentinhaber: Minda KTSN Plastic Solution GmbH & Co. KG, 01796 Pirna (DE)
(72) Erfinder: Muschick, Micha, 01796 Pirna (DE)
(74) Vertreter: Weidner Stern Jeschke

(56) Entgegenhaltungen:
- DE-A1- 19 717 011
- DE-A1-102014 004 247

## Beschreibung

Die Erfindung betrifft eine Einrastvorrichtung für eine push-push-Verriegelung, wobei die Einrastvorrichtung ein Antriebsmittel, ein betätigbares Hebelelement, ein Rastelement und eine Führungsnut aufweist, wobei mittels des Antriebsmittels ein Bewegen der Führungsnut in eine Bewegungsrichtung vorgebbar ist, das betätigbare Hebelelement entgegen der Bewegungsrichtung der Führungsnut bewegbar ist, und die Führungsnut eine Ausgangsposition, eine erste Rastposition und eine zweite Rastposition für das Rastelement, eine erste Führungsbahn zum Führen des Rastelements zu der ersten Rastposition und eine zweite Führungsbahn zum führen des Rastelements zu der zweiten Rastposition aufweist. Des Weiteren betrifft die Erfindung ein Verfahren zum betätigen einer Einrastvorrichtung für eine push-push-Verriegelung.

Push-push-Verriegelungen werden zum Befestigen von Gegenständen, beispielsweise eines Mobiltelefons oder eines Getränkebehälter in einem Getränkehalter, in einem Fahrzeug verwendet. Ebenso finden diese Anwendung bei schiebbaren Abdeckungen von Ablagefächern in einem Kraftfahrzeug.

Nachteilig bei der bekannten push-push-Verriegelung ist, dass diese entweder nur eine Einraststellung und/oder Halteposition aufweisen oder dass zunächst eine erste Einraststellung eingestellt und/oder durchlaufen werden muss, um zu einer zweiten Einraststellung zu gelangen. Somit können beispielsweise zwei verschieden große Getränkebehälter nicht in ein und demselben Getränkehalter befestigt werden, und ein direkter Wechsel zwischen zwei unterschiedlichen Einrastpositionen ist nicht möglich.

Aus der DE 10 2013 114 416 A1 ist ein Tür- oder Fensterverschluss mit einer einfachen Herzkurve mit einer Führungsbahn bekannt.

Die DE 10 2014 004 247 A1 beschreibt eine arretierbare Abdeckung für einen Getränkehalter mit zwei Aufnahmeöffnungen für Getränkebehälter, bei dem die Arretierungseinrichtung zwei hintereinander geschaltete Herzkurven aufweist, sodass durch Bewegen der arretierbaren Abdeckung zuerst die erste Arretierungsposition der ersten Herzkurve und anschließend die zweite Arretierungsposition der zweiten Herzkurve einnehmbar ist.

In der US 2007/0120380 A1 ist ein Ablagefach mit einer Türklappe offenbart, wobei die Verschließeinrichtung eine Herzkurve mit einer Führungsbahn und zwei Riegelnestern aufweist. Ebenso ist in der US 2002/0096892 A1 ein Ablagefach mit einer Verschlussklappe offenbart, bei der die Verriegelungsvorrichtung ebenfalls nur eine einfache Herzkurve aufweist.

Die DE 197 17 011 A1 offenbart eine Vorrichtung zur Halterung eines Getränkebehälters mit einem ausfahrbaren Ausfahrarm und einer schwenkbar gehaltenen Aufnahme für einen Getränkebehälter, wobei der ausfahrbare Ausfahrarm in einer ortsfesten im Gehäuse angeordneten herzkurvenförmigen Kurvenführung gefahren wird.

Nachteilig bei diesen bekannten Verriegelungsvorrichtungen ist, dass ausgehend von einer Ausgangsposition nicht wahlweise direkt zwei unterschiedliche Einrastpositionen eingenommen werden können. Somit ist es mit diesen Verriegelungseinrichtungen nicht möglich, eine einzige Aufnahmeöffnung für einen Getränkebehälter direkt zum Verriegeln von unterschiedlich großen Getränkebehältern zu verwenden.

Aufgabe der Erfindung ist es den Stand der Technik zu verbessern.

Gelöst wird die Aufgabe durch eine Einrastvorrichtung mit den Merkmalen des Anspruchs 1.

Somit wird eine Einrastvorrichtung für eine push-push-Verriegelung bereitgestellt, bei der ausgehend von der Ausgangsposition wahlweise zwei verschiedene Rastpositionen über die erste Führungsbahn oder die zweite Führungsbahn angesteuert werden. Somit wählt ein Bediener der Einrastvorrichtung direkt beim Bedienen die erste oder die zweite Rastposition aus, ohne dass der Bediener bei Auswahl der zweiten Rastposition zuerst die erste Rastposition ansteuern muss. Folglich ist sowohl ein großer Getränkebehälter als auch ein kleiner Getränkebehälter in einer einzigen Aufnahmeöffnung eines Getränkehalters arretierbar.

Somit wird eine flexibel nutzbare Einrastvorrichtung bereitgestellt.

Die Erfindung beruht darauf, dass die Einrastvorrichtung zwei nebeneinander angeordnete Führungsbahnen aufweist, welche beide in einem Ausgangsbereich starten und in einem Endbereich enden, wobei der Ausgangsbereich und der Endbereich jeweils über die Rückführbahn verbunden sind. Somit ist ein direkter Wechsel von der ersten Führungsbahn auf die zweite Führungsbahn oder umgekehrt möglich.

Folgendes Begriffliche sei erläutert:

Eine "Einrastvorrichtung" ist eine Vorrichtung zum Arretieren eines Gegenstandes. Mit einer Einrastvorrichtung wird beispielsweise der Halter eines Getränkehalters, die Klappe eines Ablagefaches oder der verschiebbare Ablagedeckel eines Ablagefaches arretiert.

Eine "push-push-Verriegelung" ist insbesondere eine Verriegelung, bei der durch Drücken eines Betätigungselementes ein Rastelement sowohl aus- als auch eingerastet wird. Bei einer push-push-Verriegelung wird insbesondere durch Betätigen gegen eine Federkraft ein Einrasten erzielt und beim erneuten Betätigen die Einrastung aufgehoben, wobei das Rastelement sich beim Loslassen mit der Federkraft zurück in seine Ausgangsposition bewegt.

Ein "Antriebsmittel" ist insbesondere ein Bauteil, welches ein Bewegen des Rastelementes und/oder der Führungsnut in eine Bewegungsrichtung bewirkt. Bei einem Antriebsmittel kann es sich beispielsweise um eine gespannte Feder handeln.

Bei einem "betätigbaren Hebelelement" handelt es sich insbesondere um einen Bedienelement. Ein betätigbares Hebelelement ist insbesondere ein Griff und/oder Bedienknopf.

Ein "Rastelement" ist insbesondere ein Element, welches ein- und ausrastbar ist. Bei einem Rastelement handelt es sich beispielsweise um einen Bolzen oder Pin.

Eine "Führungsnut" ist insbesondere eine längliche Vertiefung, in welcher das Rastelement auf einer Bahn geführt wird. Die Führungsnut kann insbesondere in eine Steuerplatte eingebracht sein, wobei die Führungsnut unten geschlossen ist oder die Steuerplatte vollständig durchbricht, sodass das Rastelement im letzteren Fall vollständig durch die Führungsnut hindurchgesteckt werden kann.

Eine "Ausgangsposition" ist insbesondere die Position, welche das Rastelement einnimmt, wenn die Einrastvorrichtung nicht betätigt wird.

Eine "erste Führungsbahn" und eine "zweite Führungsbahn" sind jeweils ein Abschnitt der Führungsnut, wobei die erste Führungsbahn und die zweite Führungsbahn im Wesentlichen nebeneinander angeordnet sind. "Im Wesentlichen nebeneinander angeordnet" bedeutet insbesondere, dass die erste Führungsbahn und die zweite Führungsbahn zwei alternative Wege für das Rastelement darstellen. Die erste Führungsbahn und die zweite Führungsbahn sind in ihrem Anfangsbereich und in ihrem Endbereich jeweils über die Rückführungsbahn miteinander verbunden. Somit stellen die erste Führungsbahn und die zweite Führungsbahn zwei alternativ wählbare Führungsbahnen dar. Nebeneinander kann zudem bedeuten, dass Teile der Führungsbahnen parallel und/oder konzentrisch zueinander verlaufen.

Die "Rückführungsbahn" ist insbesondere ein Teil der Führungsnut, welche die erste Führungsbahn und die Führungsbahn jeweils an ihren Anfangspunkten sowie an ihren Endpunkten (Rastpositionen) miteinander verbindet.

Die "erste Rastposition" und die "zweite Rastposition" sind Positionen, an denen das Rastelement in der ersten Führungsbahn oder der zweiten Führungsbahn einrastet.

In einer weiteren Ausführungsform der Einrastvorrichtung weist die Führungsnut eine Form einer Herzkurve auf, wobei die Herzkurve mittels der beiden nebeneinander angeordneten Führungsbahnen zweistufig ausgebildet ist.

Dadurch, dass die Herzkurve und somit die Führungsnut zwei parallele Stufen aufweist, können wahlweise direkt zwei Einrastpositionen und somit zwei verschiedene Arretierungen realisiert werden.

Folglich ist nur ein Betätigen des Hebelelementes durch den Bediener notwendig, um entweder die erste Rastposition oder die zweite Rastposition anzusteuern. Somit wird der Bedienerkomfort erhöht.

Eine "Herzkurve" ist insbesondere eine ebene, algebraische Kurve vierter Ordnung, welche eine Herzform aufweist. Dadurch, dass die Führungsnut in Form einer Herzkurve ausgebildet ist und die zwei nebeneinander angeordneten Führungsbahnen aufweist, wird eine zweistufige Herzkurve realisiert.

Um eine Verbindung zwischen jeweils den Anfangs- und Endbereichen der ersten Führungsbahn und der zweiten Führungsbahn und somit ein flexiblen Wechsel zwischen den Führungsbahnen zu realisieren, ist die Rückführbahn derart eingerichtet, dass ein Rückführen des Rastelementes von der ersten Rastposition der ersten Führungsbahn in die Ausgangsposition oder in die zweite Rastposition der zweiten Führungsbahn und/oder ein Rückführen des Rastelementes von der zweiten Rastposition der zweiten Führungsbahn in die Ausgangsposition realisierbar ist.

Hierbei ist es besonders vorteilhaft, dass zum Rückführen aus den beiden Rastpositionen nur eine einzige Rückführbahn benötigt wird. Folglich wird mittels einer einzigen zweistufigen Herzkurve eine sehr flexibel nutzbare Einrastvorrichtung bereitgestellt.

In einer weiteren Ausführungsform ist die Führungsnut derart eingerichtet, dass die Einrastvorrichtung durch Bewegen des betätigbaren Hebelelementes entgegen der Bewegungsrichtung der Führungsnut lösbar ist, sodass das Rastelement aus der Ausgangsposition, der ersten Rastposition oder der zweiten Rastposition herausbewegbar ist.

Dadurch kann das Rastelement aus der Ausgangsposition in eine der beiden Führungsbahnen gebracht werden oder von einem der beiden Rastpositionen zurück in die Rückführbahn geführt und in eine neue Position gebracht werden. Folglich ist die Position des Rastelementes gezielt veränderbar.

Um gezielt die erste Führungsbahn oder die zweite Führungsbahn anzusteuern, weist die Führungsnut einen ersten Betätigungswinkel oder einen zweiten Betätigungswinkel auf, sodass in Abhängigkeit einer Bewegung des betätigbaren Hebelelementes das Rastelement gezielt in die erste Führungsbahn oder in die zweite Führungsbahn bewegbar ist.

Somit wird aufgrund des jeweiligen Betätigungswinkels dem Bediener eine haptische Rückmeldung gegeben, welche der beiden Führungsbahnen der Bediener auswählt. Hierbei ist bevorzugt der zweite Betätigungswinkel größer als der erste Betätigungswinkel.

Der "erste Betätigungswinkel" und der "zweite Betätigungswinkel" sind insbesondere jeweils ein Winkel in der Form der Führungsnut, welcher im Zusammenwirken mit einer Bewegung des betätigbaren Hebelelementes das Rastelement gezielt in die erste Führungsbahn oder die zweite Führungsbahn lenkt. Hierbei weisen der erste Betätigungswinkel und der zweite Betätigungswinkel insbesondere ein unterschiedliches Winkelmaß auf. Insbesondere beschreibt der Betätigungswinkel denjenigen Winkel, bei dem die jeweilig Führungsbahn der Führungsnut (Herzkurve) mit dem Rastelement ansteuerbar ist.

Um die Bewegung des betätigbaren Hebelelementes und/oder der Führungsnut einzustellen und/oder abzubremsen, weist die Einrastvorrichtung eine Bremseinrichtung auf.

Eine "Bremseinrichtung" ist insbesondere eine Einrichtung, welche die Bewegung des betätigbaren Hebelelementes und/oder der Führungsnut abbremst oder dieser Bewegung entgegenwirkt. Bei einer Bremseinrichtung kann es sich beispielsweise um einen Bremsklotz und/oder eine Verzahnung handeln.

Um ein direktes und effektives Abbremsen der Einrastvorrichtung zu erreichen, weist die Einrastvorrichtung eine Verzahnung auf, sodass die Verzahnung der Einrastvorrichtung formschlüssig mit einer Verzahnung der Bremseinrichtung verbindbar ist.

Eine "Verzahnung" ist insbesondere die Formgebung der Einrastvorrichtung und/oder der Bremseinrichtung mit Zacken und/oder Zinken zum Herstellen einer Verbindung zwischen der Einrastverbindung und/oder der Bremseinrichtung, zum Erhöhen einer Reibung zwischen beiden und somit zum Abbremsen.

Folglich kann in sehr einfacher und effektiver Weise die Einrastvorrichtung mittels der Bremseinrichtung abgebremst werden.

Um die Einrastvorrichtung flexibel in einer größeren Baugruppe einsetzen zu können, weist die Einrastvorrichtung eine Achse auf, sodass die Achse als Antriebs- und/oder Positionierelement für ein weiteres Bauteil verwendbar ist.

Eine "Achse" ist insbesondere ein Maschinenelement, welches zur Lagerung drehbarer Bauteile dient.

Um das Rastelement zu halten und sein Bewegen zu ermöglichen, ist das Rastelement außerhalb der Führungsnut rotierbar gelagert.

"Rotierbar gelagert" bedeutet, dass das Rastelement in einem Lager als Halterung außerhalb der Führungsnut rotieren kann, sodass das Rastelement in der Führungsnut eine Bewegung entsprechend der Führungsbahn ausführen kann.

In einem zusätzlichen Aspekt der Erfindung wird die Aufgabe gelöst durch ein Verfahren zum Betätigen einer Einrastvorrichtung für eine push-push-Verriegelung, wobei die Einrastvorrichtung eine zuvor beschriebene Einrastvorrichtung ist, mit folgenden Schritten:
- Bewegen des betätigbaren Hebelelementes entgegen der Bewegungsrichtung der Führungsnut,
- Loslassen des betätigbaren Hebelelementes beim Erreichen der ersten Führungsbahn oder der zweiten Führungsbahn, sodass das Rastelement entlang der ersten Führungsbahn bis zur ersten Rastposition oder entlang der zweiten Führungsbahn bis zur zweiten Rastposition bewegt wird, und
- Halten des Rastelementes in der ersten Rastposition oder der zweiten Rastposition.

Somit ist mit einer einzigen push-Betätigung das Rastelement wahlweise in die erste Rastposition oder die zweite Rastposition bewegbar. Folglich können wahlweise durch ein einziges Betätigen zwei unterschiedliche Arretierungen realisiert werden und somit beispielsweise eine große Aufnahmeöffnung eines Getränkehalters direkt auf einen kleinen Getränkebehälter eingestellt und letzterer arretiert werden.

In einer weiteren Gestaltungsform des Verfahrens erfolgt zum Lösen der ersten Rastposition oder der zweiten Rastposition des Rastelementes ein Bewegen des betätigbaren Hebelelementes entgegen der Bewegungsrichtung der Führungsnut derart, dass über die Rückführbahn das Rastelement in die Ausgangsposition zurückgeführt oder das Rastelement von der ersten Rastposition in die zweite Rastposition bewegt wird.

Somit wird mit einer zweiten push-Bewegung das Rastelement wieder gelöst. Folglich wird mit dem Verfahren ein sehr einfaches Betätigen einer Einrastvorrichtung zum Einrasten und Lösen eines Rastelementes realisiert.

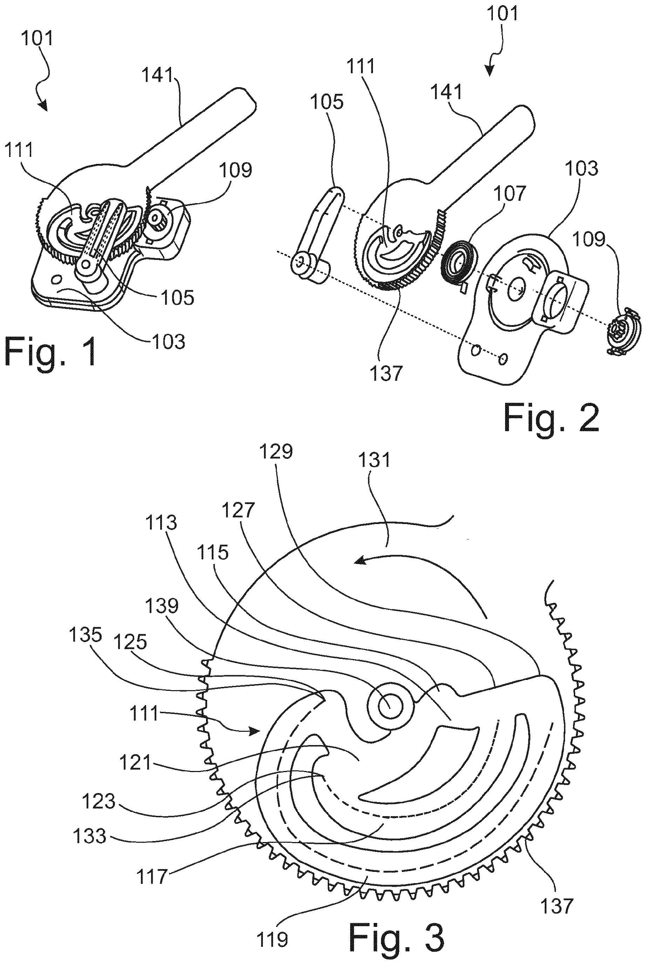

Im Weiteren wird die Erfindung anhand eines Ausführungsbeispiels näher erläutert. Es zeigen
- Figur 1: eine schematische Darstellung eines Einrasthebels,
- Figur 2: eine stark schematische Explosionszeichnung des Einrasthebels der Figur 1, und
- Figur 3: einen Ausschnitt des Einrasthebels mit einer zweistufigen Herzkurve.

Ein Einrasthebel 101 ist manuell betätigbar und weist eine Herzkurve 111, einen Griff 141, einen Pin 105 und eine Grundplatte 103 auf. Der Pin 105 ist auf der Grundplatte 103 rotierbar gelagert und greift am anderen Ende in die Herzkurve 111 ein.

Der Einrasthebel 101 weist eine (Spiral)Feder 107 zum Antrieb der Herzkurve 111 auf. Des Weiteren weist der Einrasthebel 101 eine Bremse 109 auf, welche auf der Grundplatte 103 angeordnet ist. Die Bremse 109 greift mit ihrer Verzahnung in eine Verzahnung 137 des Einrasthebels 101.

Die Herzkurve 111 weist eine Herzposition 113, ein Kopfende 115, eine erste Führungsbahn 117, eine zweite Führungsbahn 119 und eine Rückführungsbahn 121 auf. Zudem hat die Herzkurve 111 einen ersten Betätigungswinkel 127 zum Ansteuern der ersten Führungsbahn 117 und einen zweiten Betätigungswinkel 129 zum Ansteuern der zweiten Führungsbahn 119, wobei der zweite Betätigungswinkel 129 größer als der erste Betätigungswinkel 127 ist.

Am Ende der ersten Führungsbahn 117 (angezeigt durch eine gedachte Mittellinie) befindet sich die erste Halteposition 123, bei welcher ein erster Fahrwinkel 133 (Rotation der Herzkurve 111) erreicht wird. Entsprechend weist die zweite Führungsbahn 119 (angezeigt durch eine gedachte Mittellinie) an ihrem Ende eine zweite Halteposition 125 und entsprechend einen zweiten Fahrwinkel 135 auf, wobei der zweite Fahrwinkel 135 größer als der erste Fahrwinkel 133 ist. Hierbei beschreibt der jeweilige Fahrwinkel eine maximale Rotation der Herzkurve 111 beim Auslösen.

Der Einrasthebel 101 weist in seiner Mitte eine Achse 139 auf, wobei die Herzkurve 111 um die Achse 139 angetrieben von der Feder 107 in Fahrrichtung 131 bewegbar ist.

Folgende Arbeitsvorgänge werden mit dem Einrasthebel 101 realisiert.

Der Einrasthebel 101 wird an dem Griff 141 von einem Bediener gegriffen und durch Drücken des Griffes entgegen der Fahrrichtung 131 wird der Pin 105 aus der Herzposition 113 zum ersten Betätigungswinkel 127 bewegt. Beim Erreichen des ersten Betätigungswinkels 127 wird der Griff 141 vom Bediener losgelassen und der Pin 105 wird entlang der ersten Führungsbahn 117 bis zum Erreichen des ersten Fahrwinkels 133 bewegt, wobei bei Erreichen des ersten Fahrwinkels 133 der Pin 105 in der ersten Halteposition 123 gehalten wird, sodass der Einrasthebel 101 in der ersten Halteposition 123 eingerastet ist.

Nach einem Ausrasten des Pins 105 aus der ersten Halteposition 123 ist dieser entweder zurück zur Herzposition 113 oder zur zweiten Halteposition 125 fahrbar.

Für eine Rückkehr aus der ersten Halteposition 123 in die Herzposition 113 wird durch Betätigen des Griffes 141 die Herzkurve 111 entgegen der Fahrrichtung 131 rotiert, bis der Pin 105 über die Rückführungsbahn 121 am Kopfende 115 anschlägt. Danach wird der Griff 141 vom Bediener losgelassen und der Pin 105 rotiert dadurch selbsttätig in die Herzposition 113.

Alternativ wird zum Fahren des Pins 105 von der ersten Halteposition 123 in die zweite Halteposition 125 der Griff 141 vom Bediener derart betätigt, dass die Herzkurve 111 kurzzeitig gegen die Fahrrichtung 131 rotiert wird. Beim Loslassen des Griffes 141 wird der Pin 105 durch Rotieren der Herzkurve 111 von selbst über die Rückführungsbahn 121 in die zweite Halteposition 125 bewegt und dort gehalten.

Zum Fahren des Pins 105 von der Herzposition 113 direkt in die zweite Halteposition 125 wird der Griff 141 und dadurch die Herzkurve 111 durch Drücken entgegen der Fahrrichtung 131 bewegt. Beim Passieren des ersten Betätigungswinkel 127 erhält der Bediener ein haptisches Feedback, welches eine Grenze zwischen dem ersten Betätigungswinkel 127 und dem zweiten Betätigungswinkel 129 signalisiert. Nach Erreichen des zweiten Betätigungswinkels 129 lässt der Bediener den Griff 141 und somit die Herzkurve 111 los, und der Pin 105 fährt entlang der zweiten Führungsbahn 119 bis zum Erreichen des zweiten Fahrwinkels 135, wobei beim Erreichen des zweiten Fahrwinkels 135 der Pin 105 in der zweiten Halteposition 125 gehalten wird, sodass der Einrasthebel 101 eingerastet ist.

Zum Ausrasten des Pins 105 aus der zweiten Halteposition 125 wird der Griff 141 vom Bediener und somit die Herzkurve 111 entgegen der Fahrrichtung 131 rotiert, bis der Pin 105 über die Rückführungsbahn 121 am Kopfende 115 anschlägt. Anschließend muss der Griff 141 und somit die Herzkurve 111 vom Bediener losgelassen werden, sodass der Pin 105 selbsttätig in die Herzposition 113 rotiert.

Somit wird ein Einrasthebel 101 bereitgestellt, welcher wahlweise in eine erste Halteposition 123 oder eine zweite Halteposition 125 einrastet, und bei dem aus der ersten Halteposition 123 flexibel in die Herzposition 113 als Ausgangsstellung oder in die zweite Halteposition 125 gewechselt werden kann.

### Bezugszeichenliste

- 101: Einrasthebel
- 103: Grundplatte
- 105: Pin
- 107: Feder
- 109: Bremse
- 111: Herzkurve (Führungsnut)
- 113: Herzposition
- 115: Kopfende
- 117: erste Führungsbahn
- 119: zweite Führungsbahn
- 121: Rückführungsbahn
- 123: erste Halteposition
- 125: zweite Halteposition
- 127: erster Betätigungswinkel
- 129: zweiter Betätigungswinkel
- 131: Fahrrichtung
- 133: erster Fahrwinkel
- 135: zweiter Fahrwinkel
- 137: Verzahnung
- 139: Achse
- 141: Griff

## Patentansprüche

1. Einrastvorrichtung (101) für eine push-push-Verriegelung, wobei die Einrastvorrichtung (101) ein Antriebsmittel (107), ein betätigbares Hebelelement (141), ein Rastelement (105) und eine Führungsnut (111) aufweist, wobei mittels des Antriebsmittels (107) ein Bewegen der Führungsnut (111) in eine Bewegungsrichtung (131) vorgebbar ist, das betätigbare Hebelelement (141) entgegen der Bewegungsrichtung (131) der Führungsnut (111) bewegbar ist, und die Führungsnut (111) eine Ausgangsposition (113), eine erste Rastposition (123) und eine zweite Rastposition (125) für das Rastelement (105), eine erste Führungsbahn (117) zum Führen des Rastelementes (105) zu der ersten Rastposition (123) und eine zweite Führungsbahn (119) zum Führen des Rastelementes (105) zu der zweiten Rastposition (125) aufweist, **dadurch gekennzeichnet, dass** die erste Führungsbahn (117) und die zweite Führungsbahn (119) im Wesentlichen nebeneinander angeordnet und über eine Rückführungsbahn (121) der Führungsnut (111) verbunden sind, wobei die beiden Führungsbahnen (117, 119) in einem Ausgangsbereich starten und in einem Endbereich enden, wobei der Ausgangsbereich und der Endbereich jeweils über die Rückführbahn (121) verbunden sind, so dass ein direkter Wechsel von der ersten Führungsbahn auf die zweite Führungsbahn oder umgekehrt ermöglicht ist.

2. Einrastvorrichtung (101) nach Anspruch 1, **dadurch gekennzeichnet, dass** die Führungsnut (111) eine Form einer Herzkurve (111) aufweist, wobei die Herzkurve (111) mittels der beiden nebeneinander angeordneten Führungsbahnen (117, 119) zweistufig ausgebildet ist.

3. Einrastvorrichtung (101) nach Anspruch 1 oder 2, **dadurch gekennzeichnet, dass** die Rückführbahn (121) derart eingerichtet ist, dass ein Rückführen des Rastelementes (105) von der ersten Rastposition (123) der ersten Führungsbahn (117) in die Ausgangsposition (113) oder in die zweite Rastposition (125) der zweiten Führungsbahn (119) und/oder ein Rückführen des Rastelements (105) von der zweiten Rastposition (125) der zweiten Führungsbahn (119) in die Ausgangsposition (113) realisierbar ist.

4. Einrastvorrichtung (101) nach einem der vorherigen Ansprüche, **dadurch gekennzeichnet, dass** die Führungsnut (111) derart eingerichtet ist, dass die Einrastvorrichtung (101) durch Bewegen des betätigbaren Hebelelementes (141) entgegen der Bewegungsrichtung (131) der Führungsnut (111) lösbar ist, sodass das Rastelement (105) aus der Ausgangsposition (113), der ersten Rastposition (123) oder der zweiten Rastposition (125) herausbewegbar ist.

5. Einrastvorrichtung (101) nach einem der vorherigen Ansprüche, **dadurch gekennzeichnet, dass** die Führungsnut (111) einen ersten Betätigungswinkel (127) und einen zweiten Betätigungswinkel (129) aufweist, sodass in Abhängigkeit einer Bewegung des betätigbaren Hebelelementes (141) das Rastelement (105) gezielt in die erste Führungsbahn (117) oder die zweite Führungsbahn (119) bewegbar ist.

6. Einrastvorrichtung (101) nach einem der vorherigen Ansprüche, **dadurch gekennzeichnet, dass** die Einrastvorrichtung (101) eine Bremseinrichtung (109) aufweist.

7. Einrastvorrichtung (101) nach Anspruch 6, **dadurch gekennzeichnet, dass** die Einrastvorrichtung (101) eine Verzahnung (137) aufweist, sodass die Verzahnung (137) der Einrastvorrichtung (101) formschlüssig mit einer Verzahnung der Bremseinrichtung (109) verbindbar ist.

8. Einrastvorrichtung (101) nach einem der vorherigen Ansprüche, **dadurch gekennzeichnet, dass** die Einrastvorrichtung (101) eine Achse (139) aufweist, sodass die Achse (139) als Antriebs- und/oder Positionierelement für ein weiteres Bauteil verwendbar ist.

9. Einrastvorrichtung (101) nach einem der vorherigen Ansprüche, **dadurch gekennzeichnet, dass** das Rastelement (105) außerhalb der Führungsnut (111) rotierbar gelagert ist.

10. Verfahren zum Betätigen einer Einrastvorrichtung für eine push-push-Verriegelung, wobei die Einrastvorrichtung eine Einrastvorrichtung (101) nach einem der Ansprüche 1 bis 9 ist, **gekennzeichnet durch** folgende Schritte:
- Bewegen des betätigbaren Hebelelementes (141) entgegen der Bewegungsrichtung (131) der Führungsnut (111),
- Loslassen des betätigbaren Hebelelementes (141) beim Erreichen der ersten Führungsbahn (117) oder der zweiten Führungsbahn (119), sodass das Rastelement (105) entlang der ersten Führungsbahn (117) bis zur ersten Rastposition (123) oder entlang der zweiten Führungsbahn (119) bis zur zweiten Rastposition (125) bewegt wird, und
- Halten des Rastelementes (105) in der ersten Rastposition (123) oder in der zweiten Rastposition (125) .

11. Verfahren zum Betätigen einer Einrastvorrichtung für eine push-push-Verriegelung nach Anspruch 10, **dadurch gekennzeichnet, dass** zum Lösen der ersten Rastposition (123) oder der zweiten Rastposition (125) des Rastelementes (105) ein Bewegen des betätigbaren Hebelelementes (141) entgegen der Bewegungsrichtung (131) der Führungsnut (111) derart erfolgt, dass über die Rückführungsbahn (121) das Rastelement (105) in die Ausgangsposition zurückbewegt oder das Rastelement (105) von der ersten Rastposition (123) in die zweite Rastposition (125) bewegt wird.

## Claims

1. Latching device (101) for a push-push lock, wherein the latching device (101) comprises a drive means (107), an actuatable lever element (141), a latching element (105) and a guide groove (111), wherein by means of the drive means (107) a movement of the guide groove (111) can be predefined in one movement direction (131), the actuatable lever element (141) is movable opposite to the movement direction (131) of the guide groove (111), and the guide groove (111) has a starting position (113), a first latching position (123) and a second latching position (125) for the latching element (105), a first guide track (117) for guiding the latching element (105) to the first latching position (123) and a second guide track (119) for guiding the latching element (105) to the second latching position (125), **characterised in that** the first guide track (117) and the second guide track (119) are substantially arranged next to one another and are connected via a return track (121) of the guide groove (111), wherein the two guide tracks (117, 119) start in a starting area and end in an end area, wherein the starting area and the end area are connected via the return track (121), so that a direct change from the first guide track to the second guide track or vice versa is enabled.

2. Latching device (101) according to claim 1, **characterised in that** the guide groove (111) has a shape of a cardioid (111), wherein the cardioid (111) is formed in two stages by means of the two guide tracks (117, 119) arranged next to one another.

3. Latching device (101) according to claim 1 or 2, **characterised in that** the return track (121) is configured so that a return of the latching element (105) from the first latching position (123) of the first guide track (117) to the starting position (113) or to the second latching position (125) of the second guide track (119) and/or a return of the latching element (105) from the second latching position (125) of the second guide track (119) to the starting position (113) can be realised.

4. Latching device (101) according to any one of the preceding claims, **characterised in that** the guide groove (111) is configured so that the latching device (101) is releasable by moving the actuatable lever element (141) opposite to the movement direction (131) of the guide groove (111), so that the latching element (105) can be moved out of the starting position (113), the first latching position (123) or the second latching position (125) .

5. Latching device (101) according to any one of the preceding claims, **characterised in that** the guide groove (111) has a first actuating angle (127) and a second actuating angle (129), so that depending on a movement of the actuatable lever element (141), the latching element (105) is movable targetedly into the first guide track (117) or the second guide track (119).

6. Latching device (101) according to any one of the preceding claims, **characterised in that** the latching device (101) has a brake mechanism (109).

7. Latching device (101) according to claim 6, **characterised in that** the latching device (101) has toothing (137), so that the toothing (137) of the latching device (101) can be connected positively to toothing of the brake mechanism (109).

8. Latching device (101) according to any one of the preceding claims, **characterised in that** the latching device (101) has an axis (139), so that the axis (139) can be used as a drive and/or positioning element for another component.

9. Latching device (101) according to any one of the preceding claims, **characterised in that** the latching element (105) is supported rotatably outside the guide groove (111).

10. Method for actuating a latching device for a push-push lock, wherein the latching device is a latching device (101) according to any one of claims 1 to 9, **characterised by** the following steps:
- moving the actuatable lever element (141) opposite to the movement direction (131) of the guide groove (111),
- releasing the actuatable lever element (141) on reaching the first guide track (117) or the second guide track (119), so that the latching element (105) is moved along the first guide track (117) as far as the first latching position (123) or along the second guide track (119) as far as the second latching position (125), and
- holding the latching element (105) in the first latching position (123) or in the second latching position (125).

11. Method for actuating a latching device for a push-push lock according to claim 10, **characterised in that** to release the first latching position (123) or the second latching position (125) of the latching element (105), a movement of the actuatable lever element (141) opposite to the movement direction (131) of the guide groove (111) takes place such that via the return track (121) the latching element (105) is moved back into the starting position or the latching element (105) is moved from the first latching position (123) to the second latching position (125).

## Revendications

1. Dispositif d'enclenchement (101) pour un verrouillage par poussée, dans lequel le dispositif d'enclenchement (101) présente un moyen d'entraînement (107), un élément de levier (141) pouvant être actionné, un élément d'enclenchement (105) et une rainure de guidage (111), dans lequel un déplacement de la rainure de guidage (111) dans une direction de déplacement (131) peut être spécifié au moyen du moyen d'entraînement (107), l'élément de levier (141) pouvant être actionné peut être déplacé dans le sens opposé à la direction de déplacement (131) de la rainure de guidage (111), et la rainure de guidage (111) présente une position de départ (113), une première position d'enclenchement (123) et une deuxième position d'enclenchement (125) pour l'élément d'enclenchement (105), une première voie de guidage (117) servant à guider l'élément d'enclenchement (105) vers la première position d'enclenchement (123) et une deuxième voie de guidage (119) servant à guider l'élément d'enclenchement (105) vers la deuxième position d'enclenchement (125), **caractérisé en ce que** la première voie de guidage (117) et la deuxième voie de guidage (119) sont disposées sensiblement côte à côte et sont reliées par l'intermédiaire d'une voie de retour (121) de la rainure de guidage (111), dans lequel les deux voies de guidage (117, 119) commencent dans une zone de départ et finissent dans une zone de fin, dans lequel la zone de départ et la zone de fin sont reliées respectivement par l'intermédiaire de la voie de retour (121) de sorte qu'un changement direct de la première voie de guidage sur la deuxième voie de guidage ou inversement est rendu possible.

2. Dispositif d'enclenchement (101) selon la revendication 1, **caractérisé en ce que** la rainure de guidage (111) présente une forme d'une cardioïde (111), dans lequel la cardioïde (111) est réalisée en deux phases au moyen des deux voies de guidage (117, 119) disposées côte à côte.

3. Dispositif d'enclenchement (101) selon la revendication 1 ou 2, **caractérisé en ce que** la voie de retour (121) est mise au point de telle manière qu'un retour de l'élément d'enclenchement (105) depuis la première position d'enclenchement (123) de la première voie de guidage (117) dans la position de départ (113) ou dans la deuxième position d'enclenchement (125) de la deuxième voie de guidage (119) et/ou un retour de l'élément d'enclenchement (105) depuis la deuxième position d'enclenchement (125) de la deuxième voie de guidage (119) dans la position de départ (113) peuvent être réalisés.

4. Dispositif d'enclenchement (101) selon l'une quelconque des revendications précédentes, **caractérisé en ce que** la rainure de guidage (111) est mise au point de telle manière que le dispositif d'enclenchement (101) peut être déclenché par déplacement de l'élément de levier (141) pouvant être actionné dans le sens opposé à la direction de déplacement (131) de la rainure de guidage (111) de sorte que l'élément d'enclenchement (105) peut être déplacé hors de la position de départ (113), de la première position d'enclenchement (123) ou de la deuxième position d'enclenchement (125).

5. Dispositif d'enclenchement (101) selon l'une quelconque des revendications précédentes, **caractérisé en ce que** la rainure de guidage (111) présente un premier angle d'actionnement (127) et un deuxième angle d'actionnement (129) de sorte qu'en fonction d'un déplacement de l'élément de levier (141) pouvant être actionné, l'élément d'enclenchement (105) peut être déplacé de manière ciblée dans la première voie de guidage (117) ou la deuxième voie de guidage (119).

6. Dispositif d'enclenchement (101) selon l'une quelconque des revendications précédentes, **caractérisé en ce que** le dispositif d'enclenchement (101) présente un système de freinage (109)

7. Dispositif d'enclenchement (101) selon la revendication 6, caractérisé ne ce que le dispositif d'enclenchement (101) présente une denture (137), de sorte que la denture (137) du dispositif d'enclenchement (101) peut être reliée par complémentarité de forme à une denture du système de freinage (109).

8. Dispositif d'enclenchement (101) selon l'une quelconque des revendications précédentes, **caractérisé en ce que** le dispositif d'enclenchement (101) présente un axe (139), de sorte que l'axe (139) peut être utilisé en tant qu'élément d'entraînement et/ou de positionnement pour un autre composant.

9. Dispositif d'enclenchement (101) selon l'une quelconque des revendications précédentes, **caractérisé en ce que** l'élément d'enclenchement (105) est monté de manière à pouvoir tourner à l'extérieur de la rainure de guidage (111) .

10. Procédé servant à actionner un dispositif d'enclenchement pour un verrouillage par poussée, dans lequel le dispositif d'enclenchement est un dispositif d'enclenchement (101) selon l'une quelconque des revendications 1 à 9, **caractérisé par** des étapes suivantes :
- de déplacement de l'élément de levier (141) pouvant être actionné dans le sens opposé à la direction de déplacement (131) de la rainure de guidage (111),
- de détachement de l'élément de levier (141) pouvant être actionné lors de l'atteinte de la première voie de guidage (117) ou de la deuxième voie de guidage (119) de sorte que l'élément d'enclenchement (105) est déplacé le long de la première voie de guidage (117) jusqu'à la première position d'enclenchement (123) ou le long de la deuxième voie de guidage (119) jusqu'à la deuxième position d'enclenchement (125), et
- de maintien de l'élément d'enclenchement (105) dans la première position d'enclenchement (123) ou dans la deuxième position d'enclenchement (125).

11. Procédé servant à actionner un dispositif d'enclenchement pour un verrouillage par poussée selon la revendication 10, **caractérisé en ce que** pour desserrer la première position d'enclenchement (123) ou la deuxième position d'enclenchement (125) de l'élément d'enclenchement (105), un déplacement de l'élément de levier (141) pouvant être actionné est effectué dans le sens opposé à la direction de déplacement (131) de la rainure de guidage (111) de telle manière que l'élément d'enclenchement (105) est ramené dans la position de départ par l'intermédiaire de la voie de retour (121) ou l'élément d'enclenchement (105) est déplacé depuis la première position d'enclenchement (123) dans la deuxième position d'enclenchement (125).
